# EUROPÄISCHE PATENTSCHRIFT

(11) **EP 2 309 353 B1**
(45) Veröffentlichungstag und Bekanntmachung des Hinweises auf die Patenterteilung: **19.12.2012**
(21) Anmeldenummer: 10008350.0
(22) Anmeldetag: 11.08.2010
(51) Int. Cl.: G05B 19/042

(54) **Verfahren und Einrichtung zur Optimierung des Energieverbrauchs von Werkzeugmaschinen**
Method and device for optimising the energy consumption of machine tools
Procédé et dispositif d'optimisation de la consommation d'énergie de machines-outils

(30) Priorität: 05.10.2009 DE 102009048190; 12.11.2009 DE 102009052910
(43) Veröffentlichungstag der Anmeldung: 13.04.2011
(73) Patentinhaber: DMG Service Drehen GmbH, 33689 Bielefeld (DE)
(72) Erfinder: Römer, Klaus, 31515 Wunstorf (DE); Erber, Andreas, 33161 Hövelhof (DE); Potthoff, Ulrich, 33758 Schloß Holte-Stukenbrock (DE); Schasse, Andreas, 33791 Lage-Hörste (DE)
(74) Vertreter: Schober, Mirko

(56) Entgegenhaltungen:
- EP-A2- 2 149 828
- WO-A1-2010/034333
- DE-A1- 10 317 300
- DE-A1-102006 039 257
- US-A1- 2004 083 687
- US-A1- 2005 024 330

## Beschreibung

Die Erfindung betrifft ein Energieoptimierungsverfahren sowie eine entsprechende Einrichtung zur Optimierung des Energieverbrauchs bei Werkzeugmaschinen.

In der Praxis tritt der Fall auf, dass eine noch eingeschaltete Maschine sich noch im Betriebszustand befindet, jedoch mit oder an dieser im Augenblick keine Arbeit verrichtet wird. Dieser Fall kommt insbesondere dann vor, wenn das Maschinenbedienpersonal nach Schichtende die Maschine verlässt und die Maschine bis zum folgenden Schichtbeginn nicht eingesetzt wird. Gerade bei Werkzeugmaschinen ist der Energieverbrauch im Betriebsmodus zum Teil erheblich, auch wenn keine Arbeiten verrichtet werden. Dies liegt unter anderem daran, dass insbesondere bei Werkzeugmaschinen lagegeregelte Antriebe vorhanden sind, die beim Vorhandensein einer Mehrzahl an entsprechenden Aggregaten selbst im Ruhezustand erhebliche Ruhestrommengen verbrauchen.

Aus DE 10 2006 0039 257 A1 ist eine Verstellvorrichtung für ein bewegliches Karosserieteil eines Kraftfahrzeugs sowie ein Verfahren zu dessen Verstellung bekannt. Das verstellbare Teil weist einen durch eine Steuervorrichtung ansteuerbaren Aktuator auf. Die Steuervorrichtung geht von einem Betriebszustand in einen Ruhezustand über, wenn innerhalb eines definierten Zeitraumes eine Verstellung des beweglichen Teils nicht erfolgt. Wird das bewegliche Teil manuell verstellt, wird die Steuervorrichtung wieder in den Betriebszustand versetzt.

Aus US 2004/0083687 A1 ist eine Steuervorrichtung für Schrumpftunnel für Verpackungsmaschinen bekannt. Es ist auch ein Verfahren zur Steuerung des Energieverbrauchs einer Wärmekammer durch Überwachen der Aktivität einer zugehörigen Verpackungsmaschine bekannt. Dazu wird jedesmal dann, wenn ein Betrieb der Maschine erfolgt, ein Signal erzeugt, welches an die Wärmekammer übertragen wird. Es wird dann die Zeitspanne zwischen den empfangenen Signalen gemessen. Die Zeitspanne wird mit einer vorgegebenen Schwelle verglichen und der Energieverbrauch wird in der Wärmekammer reduziert, wenn die gemessene Zeitspanne den vorgegebenen Schwellenwert überschreitet.

Der Erfindung liegt daher die Aufgabe zugrunde, ein Verfahren und eine entsprechende Einrichtung zur Optimierung des Energieverbrauchs von Werkzeugmaschinen anzugeben, mit denen die geschilderten Nachteile hinsichtlich des Energieverbrauchs beseitigt oder abgemildert werden.

Gelöst wird diese Aufgabe durch ein Verfahren mit den Merkmalen des Anspruchs 1 sowie eine Einrichtung mit den Merkmalen des Anspruchs 6.

Erfindungsgemäß ist vorgesehen, dass die Strom- oder Leistungsaufnahme einer an die erfindungsgemäße Einrichtung angeschlossenen Maschine erfasst und deren Wert mit einem vorgeb-baren Schwellenwert verglichen wird. Unterschreitet der erfasste Wert über eine ebenfalls vorgebbare Zeitspanne den Schwellenwert, wird ein Signal generiert, welches die Maschine in einen leistungsarmen Zustand umschaltet, indem beispielsweise die Reduzierung der Strom- oder Leistungsaufnahme der Maschine auf einen Ruhestrom oder allgemein Ruhewert bewirkt und damit dafür gesorgt wird, dass die Maschine in einen Ruhezustand versetzt wird, wenn sie für eine bestimmte Zeit nicht benutzt wurde. Dabei wird die Werkzeugmaschine in einen sicheren Zustand überführt, aus dem heraus sie jederzeit wieder gestartet werden kann. Durch die Möglichkeit der Eingabe unterschiedlicher Schwellenwerte ist die Anpassung an individuelle Werkzeugmaschinen möglich, so dass die erfindungsgemäße Einrichtung bei allen Maschinentypen nachgerüstet werden kann, wobei eine Stromzange als Stromaufnehmer vorgesehen werden kann, mit der ein Eingriff in die Netzversorgung vermieden wird. Das Ausgangssignal der Zeitschalteinrichtung kann außerdem verwendet werden, um weitere Verbraucher abzuschalten, wie beispielsweise Lichtquellen zur Beleuchtung des Arbeitsraums und dergleichen, die an einer von der Maschine separat vorgesehenen Netzversorgung hängen.

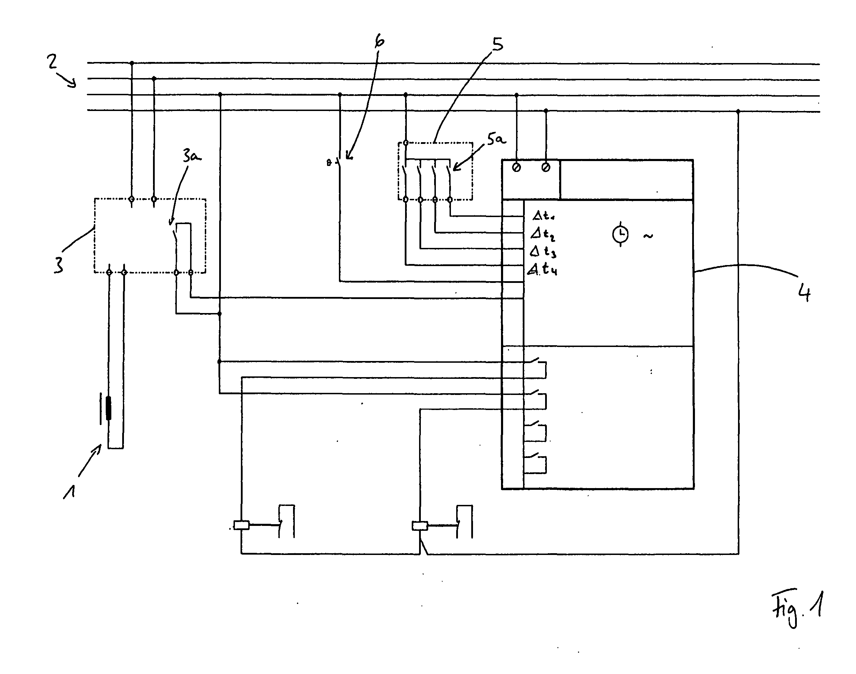

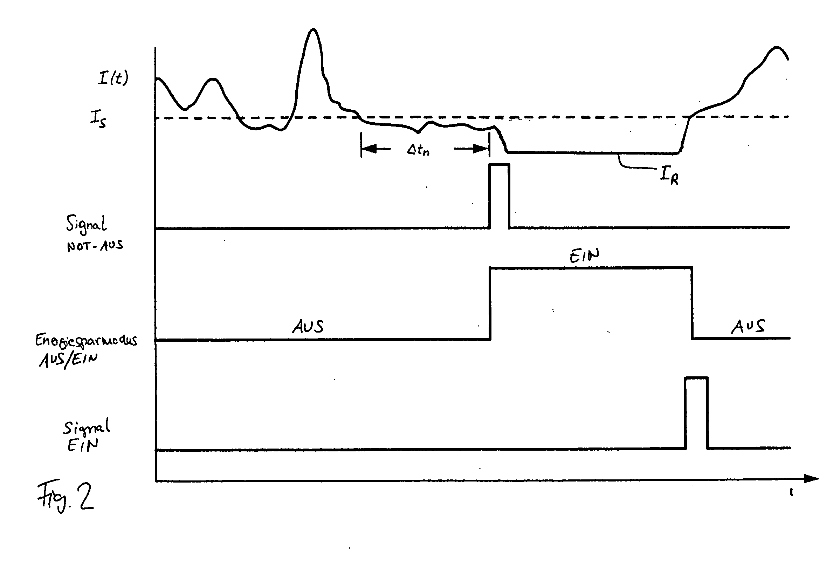

Die Erfindung wird nachfolgend anhand der Zeichnungen in den Figuren 1 und 2 schematisch näher erläutert.
- Figur 1 -: zeigt ein beispielhaftes Schaltbild der er- findungsgemäßen Einrichtung,
- Figur 2 -: zeigt ein Zeitschema, welches beispielhaft die Stromaufnahme einer Werkzeugmaschine er- läutert.

Die entsprechende Einrichtung wird über eine eigene Netzversorgung 2 gespeist, über die die Komponenten der Einrichtung entsprechend den Anforderungen mit passender Betriebsspannung von beispielsweise 230 V bzw. 24 V versorgt werden. An der Hauptstromzuleitung der mit der Einrichtung zu überwachenden Maschine, insbesondere Werkzeugmaschine, ist ein Stromaufneh-mer 1a (hier in Form einer Induktivität) angeordnet, der die Gesamtstromaufnahme misst. Wenn im Folgenden von Strommessung oder Stromaufnahme die Rede ist, so kann gleichermaßen eine andere charakteristische Größe, etwa die Spannung oder allgemein die Leistung bzw. Leistungsaufnahme erfasst werden. Das Signal des Stromaufnehmers 1a wird im gezeigten Beispiel einer als Stromüberwachungsrelais 3 ausgebildeten Schalteinrichtung zugeführt, in der der Signalwert I als Funktion der Zeit t mit einem voreingestellten Schwellenwert I_{S} verglichen wird. Wird der Schwellenwert I_{S} erreicht oder unterschritten, schließt ein Schalter 3a des Relais 3, der eine im gezeigten Beispiel als Zeitschaltwerk 4 ausgebildete Zeitschalteinrichtung in Gang setzt. An einer mit dem Zeitschaltwerk 4 gekoppelten Einstelleinrichtung 5 kann die Zeitdauer Δtₙ, nach der die Maschine stillgesetzt, d.h. in einen Ruhezustand überführt, werden soll, eingestellt werden.

Dazu sind in der gezeigten Einrichtung eine Mehrzahl Schalter 5a vorgesehen, deren Betätigung die Zeitdauer auf die Werte Δt₁ bis Δt₄ einstellt. Zum Beispiel kann Δt₁ = 10 Minuten und Δt₄ = 80 Minuten betragen. Auch andere Zeiten können vorgegeben werden, wobei eine Einstelleinrichtung vorgesehen sein kann, die eine beliebige Einstellung der Zeitdauer Δtₙ erlaubt. Nach Ablauf der durch die Einstelleinrichtung 5 voreingestellten Zeitdauer Δtₙ wird ein Schaltimpuls ausgegeben, der einen Hauptstromkreislauf der Maschine, vorzugsweise die dort vorgesehene Not-Aus-Schaltung betätigt und so die Strom- oder Leistungsaufnahme I der Maschine auf einen Ruhewert reduziert, der bevorzugt unterhalb des vorgegebenen Schwellenwertes liegt. Die Not-Aus-Schaltung ist besonders gut geeignet, weil damit die Maschine in einen sicheren Betriebszustand überführt wird, aus dem heraus sie leicht wieder gestartet werden kann.

Auch während die Maschine nicht arbeitet, kann es zu kurzzeitigen Spitzen in der Netzversorgung und damit bei den im Relais erfassten Strom- bzw. Leistungswerten kommen, z.B. wenn etwa ein Hydraulikventil betätigt wird, um einen Spanndruck aufrecht zu erhalten, so dass bei diesen Spitzen der Schalter 3a im Stromüberwachungsrelais 3 geöffnet würde und das Zeitschaltwerk 4 unterbricht. Diese kurzzeitigen Stromimpulse werden im Zeitschaltwerk 4 jedoch bevorzugt unterdrückt, so dass die Zeitmessung weiter läuft. Verbraucher, die nicht an die Not-Aus-Schaltung der Maschine angeschlossen sind, können von derselben erfindungsgemäßen Einrichtung durch einen oder mehrere Zusatzschalter geschaltet werden. Weiter kann vorgesehen sein, einen Schalter 6 zu integrieren, mit dem die Aktivierung der erfindungsgemäßen Schaltung überbrückt werden kann, so dass der Schalter 3a auch bei langem Unterschreiten des Schwellenwertes das Zeitschaltwerk 4 nicht in Gang setzt.

Das in Figur 2 gezeigte Zeitschema veranschaulicht die Verläufe der Strom- bzw. Leistungsaufnahmeaufnahme I(t) für eine Werkzeugmaschine, des Not-Aus-Signals, des Energiesparmodus der Maschine und des Ein-Signals als Funktionen der Zeit t. Während die Maschine aktiv ist, kommt es immer wieder zu Pausen, während der die Aggregate nur ihren Stillstandstrom verbrauchen. Der Schwellenwert I_{S} ist in der erfindungsgemäßen Einrichtung so gewählt, dass er etwa dem Stillstandstrom I_{R} bzw. der Leistungsaufnahme der Maschine bei Stillstand der Aggregate entspricht. Diese betriebsbedingten Stillstandphasen sind relativ kurz und die Maschine soll dabei betriebsbereit bleiben. Bei Überschreiten einer eingestellten Pausenzeit Δtₙ, d.h. wenn die erfasste Strom- oder Leistungsaufnahme I(t) für die Zeitdauer Δtₙ auf oder unter dem Schwellenwert I_{S} bleibt, wird die Maschine erfindungsgemäß abgeschaltet, wie durch den Impuls der Kurve "Signal-Not-Aus" angedeutet ist. Die Maschine verbraucht dann nur ihren erheblich niedrigeren Ruhestrom I_{R} (< I_{S}). Ab diesem Zeitpunkt verläuft die Kurve "Energiesparmodus" im Zustand EIN. Die Maschine wird erneut gestartet, wenn der Betrieb wieder aufgenommen werden soll. Dann wird ein Einschalt-Signal (Kurve "Signal EIN") gesetzt und der erfasste Stromverbrauch I(t) steigt wieder an.

## Patentansprüche

1. Verfahren zur Optimierung des Energieverbrauchs von Maschinen, die sich im Betriebszustand mit eingeschalteter Netzversorgung befinden,
**dadurch gekennzeichnet,**
**dass** die Maschinen Werkzeugmaschinen sind und das Verfahren folgende Schritte aufweist:
- Erfassen der Strom- oder Leistungsaufnahme (I) einer Werkzeugmaschine im Betriebszustand,
- Vergleichen der Strom- oder Leistungsaufnahme (I) der Maschine mit einem vorgegebenen Schwellenwert (Iₛ),
- Umschalten der Werkzeugmaschine in einen leistungsarmen Zustand, wenn die erfasste Strom- oder Leistungsaufnahme (I) der Maschine für eine vorgegebene Zeit-spanne (Δtₙ) den vorgegebenen Schwellenwert (Iₛ) unterschreitet.

2. Verfahren nach Anspruch 1,
**dadurch gekennzeichnet,**
**dass** das Umschalten durch Reduzieren der Strom- oder Leistungsaufnahme (I) der Werkzeugmaschine derart erfolgt, dass die Strom- oder Leistungsaufnahme (I) auf einen, insbesondere unterhalb des vorgegebenen Schwellenwert (Iₛ) liegenden, Ruhewert (I_{R}) gesenkt wird.

3. Verfahren nach Anspruch 1 oder 2,
**dadurch gekennzeichnet,**
**dass** bei Erreichen des vorgegebenen Schwellenwertes (Iₛ) ein Zeitschaltwerk (4) in Gang gesetzt wird,
welches die Netzversorgung der Maschine nach der vorgegebenen Zeitspanne (Δtₙ) abschaltet.

4. Verfahren nach Anspruch 1, 2 oder 3, ,
**dadurch gekennzeichnet,**
**dass** nach Unterschreiten des Schwellenwertes (Iₛ) auftretende, kurzzeitig den Schwellenwert (Iₛ) überschreitende Spitzen in der erfassten Strom- oder Leistungsaufnahme (I) beim Vergleich der Dauer der Unterschreitung des Schwellenwertes (Iₛ) mit der vorgegebenen Zeitspanne (Δtₙ) ignoriert werden.

5. Verfahren nach einem der vorherigen Ansprüche,
**dadurch gekennzeichnet,**
**dass** mit dem Reduzieren der Strom- oder Leistungsaufnahme (I)der Maschine auch nicht an der Netzversorgung hängende Maschinenteile abgeschaltet werden.

6. Einrichtung zur Optimierung des Energieverbrauchs von Maschinen, insbesondere zur Durchführung eines Verfahrens nach einem der vorherigen Ansprüche, mit einer Erfassungseinrichtung (1) zur Erfassung der Strom- oder Leistungsaufnahme (I) einer Maschine in deren Betriebszustand,
**dadurch gekennzeichnet,**
**dass** die Einrichtung weiter Folgendes aufweist: eine Schalteinheit (3), welche dazu ausgelegt ist, die erfasste Strom- oder Leistungsaufnahme (I) mit einem vorgegebenen Schwellenwert (Iₛ) zu vergleichen, und eine Zeitschalteinrichtung (4), welche dazu ausgelegt ist, die Dauer (At) des Unterschreitens des Schwellenwertes (Iₛ) zu erfassen und mit einer vorgegebenen Zeitspanne (Δtₙ) zu vergleichen, wobei die Zeitschalteinrichtung (4) weiter dazu ausgelegt ist, ein Ausschaltsignal zum Umschalten der Werkzeugmaschine in einen Leistungsarmen Zustand zu bewirken, wenn die Dauer (At) des Unterschreitens des Schwellenwertes (Iₛ) wenigstens der vorgegebenen Zeitspanne (Δtₙ) entspricht.

7. Einrichtung nach Anspruch 6,
**dadurch gekennzeichnet,**
**dass** die Zeitschalteinrichtung (4) weiter dazu ausgelegt ist, das Ausschaltsignal zur Reduzierung der Strom- oder Leistungsaufnahme (I) einer an die Einrichtung angeschlossenen Maschine zu erzeugen.

8. Einrichtung nach Anspruch 6 oder 7,
**dadurch gekennzeichnet,**
**dass** ein Zeitwahlschalter (5, 5a) vorgesehen ist, mit dem unterschiedliche Zeitspannen (Δtₙ) einstellbar sind.

9. Einrichtung nach einem der Ansprüche 6, 7 oder 8,
**dadurch gekennzeichnet,**
**dass** ein Überbrückungsschalter (6) vorgesehen ist, der das Reduzieren der Strom- oder Leistungsaufnahme (I) deaktiviert.

10. Einrichtung nach einem der Ansprüche 6 bis 9,
**dadurch gekennzeichnet,**
**dass** eine Schalteinrichtung vorgesehen ist, welche dazu ausgelegt ist, bei Vorliegen eines Ausschaltsignals Verbraucher, die über eine von der zu reduzierenden Strom- oder Leistungsaufnahme (I) unabhängige Stromversorgung verfügen, abzuschalten.

11. Einrichtung nach einem der Ansprüche 6 bis 10,
**dadurch gekennzeichnet,**
**dass** zur Erfassung der Strom- oder Leistungsaufnahme eine Stromzange vorgesehen ist.

12. Einrichtung nach einem der Ansprüche 6 bis 11,
**dadurch gekennzeichnet,**
**dass** der Schwellenwert (Iₛ) einstellbar ist.

13. Maschine, insbesondere Werkzeugmaschine, mit einer Netzversorgung und einer Einrichtung nach einem der Ansprüche 6 bis 12.

## Claims

1. Method for optimizing energy consumption of machines which are in operating mode with the power supply switched on, **characterised in that** the machines are machine tools and the method comprises the following steps:
- detecting the power consumption or input power (I) of a machine tool in operating mode
- comparing the power consumption or input power (I) of the machine with a predetermined threshold value (Iₛ)
- switching the machine tool over to a low-power mode when the detected power consumption or input power (I) of the machine has for a predetermined time span (Δtₙ) fallen below the pre-set threshold value (Iₛ).

2. Method according to claim 1,
**characterised in that**
the switch-over is executed by reducing the power consumption or input power (I) of the machine tool so that the power consumption or input power (I) is lowered to a quiescent value (I_{R}) which more particularly lies below the pre-set threshold value (Iₛ).

3. Method according to claim 1 or 2,
**characterised in that**
on reaching the preset threshold value (Iₛ) a time switch (4) is set in motion which switches off the power supply of the machine after the predetermined time span (Δtₙ).

4. Method according to claim 1, 2 or 3
**characterised in that**
once the threshold value (Iₛ) has not been reached surges which occur in the detected power consumption or input power and which temporarily exceed the threshold value (Iₛ) when comparing the period during which the threshold value (Iₛ) is not reached with the pre-set time span (Δtₙ) are disregarded.

5. Method according to one of the preceding claims
**characterised in that**
with the reduction of the power consumption or input power (I) of the machine, machine parts not attached to the mains power are also switched off.

6. Device for optimizing the energy consumption of machines, more particularly for carrying out a method according to one of the preceding claims, with a detection device (1) for detecting the power consumption or input power (I) of a machine in its operating mode,
**characterised in that**
the device has furthermore the following: a switching unit (3) which is designed to compare the detected power consumption or input power (I) with a predetermined threshold value (Iₛ), and a timer switch mechanism (4) which is designed to detect the period of time (Δt) during which the threshold value (Iₛ) has not been reached and to compare it with a pre-set time span (Δtₙ), wherein the timer switch mechanism (4) is further designed to trigger a switch-off signal for switching the machine tool over to a low power mode when the period of time (Δt) during which the threshold value (Iₛ) is not reached corresponds at least to the pre-set time span (Δtₙ).

7. Device according to claim 6
**characterised in that**
the timer switch mechanism (4) is further designed to generate the switch-off signal for reducing the power consumption or input power (I) of a machine connected to the mechanism.

8. Device according to claim 6 or 7
**characterised in that**
a time selector switch (5, 5a) is provided with which different time spans (Δtₙ) can be set.

9. Device according to one of claims 6, 7 or 8
**characterised in that**
an override switch (6) is provided which deactivates the reduction of the power consumption or input power.

10. Device according to one of claims 6 to 9
**characterised in that**
a switch mechanism is provided which is designed with the presence of a switch-off signal to switch off consumers which have a power supply which is independent of the power consumption or input power (I) which is to be reduced.

11. Device according to one of claims 6 to 10
**characterised in that**
a clip-on ammeter is provided to detect the power consumption or input power.

12. Device according to one of claims 6 to 11
**characterised in that**
the threshold value (Iₛ) is adjustable.

13. Machine, more particularly a machine tool, with a power supply and a device according to one of claims 6 to 12.

## Revendications

1. Procédé d'optimisation de la consommation d'énergie de machines, qui sont en mode de fonctionnement avec connexion au réseau,
**caractérisé en ce que**
lesdites machines sont des machines-outils et que le procédé comprend les étapes suivantes:
- captage de l'absorption de courant ou de puissance (I) d'une machine-outil en état de fonctionnement,
- comparaison de l'absorption de courant ou de puissance (I) de la machine avec une valeur de seuil (Iₐ) prédéterminée,
- commutation de la machine-outil dans un mode à faible puissance, quand l'absorption de courant ou de puissance (I) de la machine descend au-dessous d'une valeur de seuil prédéterminée (Iₛ) pendant un laps de temps prédéterminé (Δtₙ).

2. Procédé selon la revendication 1,
**caractérisé en ce que**
la commutation par réduction de l'absorption de courant ou de puissance (I) de la machine-outil est effectuée de sorte que l'absorption de courant ou de puissance (I) soit réduite à une valeur de repos (IR) située, de préférence, au-dessous de la valeur de seuil prédéterminée (Iₛ).

3. Procédé selon revendication 1 ou 2,
**caractérisé en ce que**, quand la valeur de seuil prédéterminée (Iₛ) est atteinte, un mécanisme de minuterie (4), qui coupe l'alimentation par le réseau de la machine après le laps de temps prédéterminée (Δtₙ), est mis en marche.

4. Procédé selon l'une des revendications précédentes,
**caractérisé en ce que**
des pointes dépassant brièvement la valeur de seuil (Iₛ), qui apparaissent dans l'absorption de courant ou de puissance (I) captée, après le passage sous la valeur de seuil (Iₛ), sont ignorées lors de la comparaison de la durée de maintien sous la valeur de seuil (Iₛ) avec le laps de temps prédéterminé (Δtₙ).

5. Procédé selon l'une des revendications précédentes,
**caractérisé en ce que**,
avec la réduction de l'absorption de courant ou de puissance (I) de la machine, des parties de la machine non connectées au réseau sont également déconnectées.

6. Installation pour l'optimalisation de la consommation d'énergie de machines, en particulier pour l'exécution d'un procédé selon l'une des revendications précédentes, avec dispositif de captage (1) pour le captage de l'absorption de courant ou de puissance (I) d'une machine dans son état de fonctionnement, **caractérisée en ce que** l'installation présente de plus: une unité de commutation (3), qui est conçue pour la comparaison de l'absorption de courant ou de puissance (I) saisie avec une valeur de seuil prédéterminée (Iₛ), et un mécanisme de minuterie (4), qui est conçu pour mesurer la durée de maintien sous la valeur de seuil (Iₛ) et pour la comparer avec un laps de temps prédéterminé (Δtₙ), sachant que le mécanisme de minuterie (4) est conçu, de plus, pour donner lieu à un signal de mise hors circuit pour commuter la machine-outil dans un mode à faible puissance, quand la durée de maintien sous la valeur de seuil (Iₛ) correspond au moins au laps de temps prédéterminée (Δtₙ).

7. Installation selon la revendication 6,
**caractérisée en ce**
**que** le mécanisme de minuterie (4) est conçu de plus pour générer un signal de déconnexion pour réduire l'absorption de courant ou de puissance (I) d'une machine raccordée à ladite installation.

8. Installation selon revendication 6 ou 7,
**caractérisée en ce**
**qu'**est prévu un commutateur sélecteur de temps (5, 5a), au moyen duquel différents laps de temps (Δtₙ) peuvent être réglés.

9. Installation selon la revendication 6, 7 ou 8,
**caractérisée en ce**
**qu'**est prévu un commutateur de pontage (6), qui désactive la réduction de l'absorption de courant ou de puissance (I).

10. Installation selon l'une des revendications 6 à 9,
**caractérisée en ce**
**qu'**est prévu un dispositif de commutation, qui est conçu pour déconnecter, en présence d'un signal de déconnexion, les consommateurs, qui disposent d'une alimentation en courant indépendante de l'absorption de courant ou de puissance (I) à réduire.

11. Installation selon l'une des revendications 6 à 10,
**caractérisée en ce**
**que** pour la saisie de l'absorption de courant ou de puissance (I), est prévue une pince de courant.

12. Installation selon l'une des revendications 6 à 11,
**caractérisée en ce**
**que** la valeur de seuil (Iₛ) est réglable.

13. Machine, en particulier machine-outil, avec une alimentation par le réseau et une installation selon l'une des revendications 6 à 12.
